# EUROPÄISCHE PATENTSCHRIFT

(11) **EP 1 009 801 B1**
(45) Veröffentlichungstag und Bekanntmachung des Hinweises auf die Patenterteilung: **17.03.2004**
(21) Anmeldenummer: 98952538.1
(22) Anmeldetag: 03.09.1998
(51) Int. Cl.: C12C 7/14

(54) **MESSER FÜR EINE VORRICHTUNG ZUM AUFHACKEN EINES TREBERKUCHENS**
CUTTER FOR AN ASSEMBLY THAT CHOPS UP SPENT MASH
COUTEAU POUR DISPOSITIF DESTINE AU PIOCHAGE D'UN GATEAU DE DRECHE DE BRASSERIE

(30) Priorität: 04.09.1997 DE 19738579
(43) Veröffentlichungstag der Anmeldung: 21.06.2000
(73) Patentinhaber: Hrch. Huppmann GmbH, 97318 Kitzingen (DE)
(72) Erfinder: LENZ, August, Jun., D-97318 Kitzingen (DE); HAMACHER, Marco, D-97353 Wiesentheid (DE); KANTELBERG, Bernd, D-97332 Volkach (DE)
(74) Vertreter: Böck, Bernhard, Dipl.-Ing.
(86) Internationale Anmeldenummer: PCT/DE1998/002592
(87) Internationale Veröffentlichungsnummer: WO 1999/011750

(56) Entgegenhaltungen:
- EP-A- 0 750 036
- DE-C- 225 329
- US-A- 4 696 433

## Beschreibung

Die vorliegende Erfindung betrifft Messer für Vorrichtungen zum Aufhacken des Treberkuchens, wie er in Brauereien bei der Herstellung von Bier anfällt. Diese sogenannten Aufhackmaschinen sind für einen sicheren, raschen und ergiebigen Läuterprozeß von großer Bedeutung. Während des Ablaufs der Würze setzt sich der Treber zusammen, so daß der Durchfluß wegen des gestiegenen Treberwiderstandes entsprechend verlangsamt wird. Es muß daher eine Lockerung der Treber vorgenommen werden, um den Treberwiderstand zu verringern und den Würzeablauf wieder zu beschleunigen. Beim Auslaugvorgang soll dieses Aufhacken durch Verbesserung des Kontakts des Wassers mit den Treberteilchen und durch das Bahnen neuer Wege die Auslaugung rasch und vollständig ermöglichen.

Für die genannte Aufgabe finden heute ausschließlich Maschinen Verwendung, die den Treberkuchen durchschneiden, ohne die gebildeten Schichten zu zerstören. An einer waagerechten Welle sind in horizontalen Abständen gerade, gewellte oder zickzackförmige Messer angebracht, die sich insgesamt im wesentlichen in vertikaler Richtung erstrecken. Diese Messer weisen am Schaftende ein Hack- oder Schneidelement auf. Der Messerschaft und die Schneidelemente werden durch den Treber gezogen und durchschneiden bzw. lockern dabei den Treberkuchen. Das Durchschneiden der Treber kann durch Anheben bzw. Absenken der Aufhackmaschine in verschiedenen Höhen erfolgen.

Derartige Aufhackmaschinen sind aus dem Stand der Technik bekannt. Die bekannten Vorrichtungen sind aus hygienischen Gründen vorzugsweise aus Edelstahl gefertigt. An den Edelstahlschäften der Messer sind die ebenfalls aus Edelstahl gefertigten Schneidelemente angeschweißt. Im Ergebnis sind also die Hack- oder Schneidelemente unlösbar mit dem Messerschaft verbunden.

Dieser einstückige Aufbau der Messer hat den Nachteil, daß die Hack- oder Schneidelemente nicht unabhängig von den Messern ausgewechselt werden können. Gerade diese Bauteile sind jedoch beim Durchschneiden des Trebers einer erheblichen Abrasivbelastung ausgesetzt. Erreichen deshalb die Hack- oder Schneidelemente ihre Verschleißgrenze, so muß das gesamte Messer ausgewechselt werden. Außerdem ist die Form der Hack- oder Schneidelemente einer stetigen Weiterentwicklung unterworfen und kann auf die zu verarbeitenden Rohmaterialien abgestimmt sein. Soll nun in einer bestehenden Brauereianlage die Aufhackmaschine während einer Anlagenrevision mit der neuesten Generation von Hack- oder Schneidelemente ausgestattet werden, so müssen die kompletten Messer ausgewechselt werden.

Aufgabe der vorliegenden Erfindung ist es somit, Messer für eine Aufhackmaschine zu schaffen, bei denen die Hack- oder Schneidelemente unabhängig vom Messerschaft ausgewechselt werden können.

Diese Aufgabe wird durch eine Aufhackmaschine mit den Merkmalen des Anspruchs 1 gelöst.

Vorteilhafte Ausgestaltungen der Erfindung sind Gegenstand der Unteransprüche.

Bei den erfindungsgemäßen Messern werden die Hack- oder Schneidelemente lösbar am Schaft der Aufhackmesser befestigt. Ist ein Wechsel der Hack- oder Schneidelemente wegen Verschleiß oder Anlagenrevision erforderlich, wird die Verbindung zwischen den Hack- oder Schneidelementen und dem Messerschaft gelöst und es können neue Bauteile montiert werden.

Grundsätzlich gibt es eine Vielzahl von Möglichkeiten, die lösbare Verbindung zwischen dem Messerschaft und den Hack- oder Schneidelementen zu schaffen. Besonders kostengünstig kann diese Verbindung gefertigt werden, wenn es sich um eine Schraubverbindung handelt. Auch eine Kerbstiftverbindung kann zum Einsatz kommen, wobei hier besonders vorteilhaft ist, daß die Kerbstifte nicht aus den zu verbindenden Bauteilen hervorstehen und deshalb die Schichten des Trebers beim Schneiden nicht unerwünscht verschoben werden.

Das Hack- oder Schneidelementen kann erfindungsgemäß ebenfalls mit einer Klebverbindung an dem Schaft befestigt werden. Beim Auswechseln der Hack- oder Schneidelemente wird die Klebverbindung dann aufgebrochen und ein neues Hack- oder Schneidelement aufgeklebt. Das verwendete Klebemittel ist darauf abzustimmen, daß die Verbindung ohne Beschädigung des Schafts aufgebrochen werden kann.

Die lösbare Verbindung kann auch als Schrumpfverbindung ausgeführt sein. Zum Lösen der Teile muß dann bereichsweise erhitzt werden. Die Schrumpfverbindung hat den Vorteil, das keine Befestigungselemente überstehen können, die die Strömung an dem Messer verschlechtert.

Auch kommt eine Nietverbindung zur Fixierung der Hack- oder Schneidelemente in Frage. Dabei müssen die Nieten gegebenenfalls entfernt werden, um die Anbauteile zu wechseln.

Den Schneidelementen am Ende der Messerschäfte kommt beim Auflokkern des Treberkuchens eine herausragende Rolle zu. Eine besonders gute Lockerung des Trebers wird erreicht, wenn diese Schneidelemente in an sich bekannter Art pflugscharähnlich ausgebildet sind. Da das Schaftende des Aufhackmessers in der tiefsten Stellung der Aufhackmaschine direkt über dem Boden des Läuterbottichs verfahren wird, sollte das Pflugscharelement an der Unterseite eine im wesentlichen ebene oder konkave Oberfläche aufweisen. In der untersten Stellung der Aufhackmaschine gleitet dann das Pflugscharelement mit der ebenen Unterseite mit kleinem Abstand über dem Boden des Läuterbottichs und die Oberseite durchschneidet den Treberkuchen mit dem keilförmigen Querschnittsprofil. An der weitgehend kantenfreien Oberseite tritt keine unerwünschte Verschiebung des Treberkuchens auf.

Eine optimale Lockerung des Treberkuchens wird auch dadurch gefördert, daß die Pflugscharelemente bezüglich der senkrechten Ebene, die das Ende und die Spitze der Pflugscharelemente schneidet, spiegelsymmetrisch aufgebaut sind. Durch diesen spiegelsymmetrischen Aufbau der Schneidelemente ergibt sich eine gleichmäßige Lockerung des Treberkuchen.

Beim Durchschneiden des Treberkuchens wirken auf die Pflugscharelemente erhebliche Gegenkräfte. Diese Kräfte müssen von den Pflugscharen über die lösbare Verbindung in den Messerschaft abgeleitet werden. Es ist deshalb besonders vorzugswürdig, an der Oberseite der Pflugscharelemente eine Nut oder einen durchgehenden Schlitz vorzusehen, wobei deren Querschnitt zumindest abschnittsweise formkomplementär zum Querschnitt des Messerschaftes ausgestaltet ist. Die Pflugscharelemente können mit dieser Nut auf dem Messerfuß aufgeschoben werden und die daraus folgende formschlüssige Verbindung kann in Verbindung mit einem weiteren Befestigungselement die auftretenden Druckkräfte optimal übertragen. Eine derartige Befestigung der Pflugscharelemente am Messerfuß kann beispielsweise durch Einschrauben einer Fixierschraube oder Einschlagen eines Kerbstifts hergestellt werden.

Um den Treberkuchen insbesondere direkt über dem Boden des Läuterbottichs besonders intensiv zu durchschneiden, kann jedes Aufhackmesser in an sich bekannter Art und Weise einen geteilten Schaft mit jeweils einem Pflugscharelement an beiden Schaftende aufweisen. Beide Pflugscharelemente befinden sich in gleicher vertikaler Höhe, um ein Verfahren der Aufhackmaschine in die tiefste Stellung zu ermöglichen, sind jedoch horizontal versetzt angeordnet. Die Schnittdichte im Treberkuchen wird durch diese Maßnahme wesentlichen erhöht.

Auch im mittleren Bauteilbereich des Messerschaftes können in an sich bekannter Art im wesentlichen horizontal verlaufende Schneidelemente angeordnet sein. Erfindungsgemäß können auch diese Horizontalmesser lösbar mit dem Schaft verbunden werden.

Wegen der besonders guten mechanischen und hygienischen Eigenschaften sollte der Schaft der erfindungsgemäßen Aufhackmesser in an sich bekannter Weise aus Edelstahl hergestellt sein. Besonders geeignet sind dabei Flachstähle, da lediglich ein minimaler Fertigungsaufwand zur Herstellung des Messerschafts aus diesem Rohmaterial notwendig ist.

Die Lockerung des Treberkuchens hängt insbesondere von der Form der Pflugscharelemente und der Horizontalmesser ab. Um ein Verschieben der Schichten des Treberkuchens zu verhindern, müssen insbesondere die Pflugscharelemente besonders strömungsgünstig ausgestaltet sein. Als besonders vorteilhaft haben sich dabei Pflugscharelemente mit komplexen Freiformflächen herausgestellt. Die Herstellung solcher Freiformflächen mit konventionellen spanenden Bearbeitungsverfahren ist außerordentlich aufwendig, da die Pflugscharelemente aus massiven Rohlingen mit mehrachsige Fräsmaschinen ausgefräst werden müssen. Es ist deshalb vorzugswürdig, die Pflugscharelemente und/oder die Horizontalmesser als Gußkörper herzustellen. Komplexe Freiformflächen können in einem Gießverfahren einfach gefertigt werden. In einer einmal hergestellten Gießform können zudem im Prinzip beliebig viele Pflugscharelemente hergestellt werden.

Besonders günstig lassen sich die pflugscharähnlichen Elemente und/oder die Horizontalmesser aus einem Nichteisenmetall herstellen, denn Nichteisenmetalle können sehr viel besser in Gießverfahren verarbeitet werden als insbesondere Stahl. Da zwischen den Anbauteilen und dem Messerschaft keine Schweißverbindung notwendig ist, wie das bei konventionellen Aufhackmessern erforderlich ist, ist es möglich die Anbauteile aus einem Nichteisenmetall mit guten Gußeigenschaften herzustellen.

Es ist bekannt, daß das Spurenelement Zink von großer physiologischer Bedeutung bei der Zellvermehrung der Bierhefe während des Gärungsprozesses ist. Ein höherer Zinkgehalt hat deshalb einen positiven Einfluß auf den Gärprozeß. In traditionellen Brauanlagen waren eine Vielzahl von Bauteilen aus Zinklegierungen, insbesondere Messing, vorhanden, die mit der Würze in unmittelbaren Kontakt kamen. Aus diesen zinkhaltigen Bauteilen wurden während des Brauprozesses winzige Spuren von Zinkionen ausgewaschen und erhöhten somit in gewünschter Weise den Zinkgehalt in der Würze. In modernen Brauanlagen sind beinahe sämtliche Bauteile aus Edelstahl gefertigt. Die an sich gewünschte Einwaschung von Zinkionen aus den Anlagebauteilen ist deshalb ausgeschlossen. Da die Pflugscharelemente und die Horizontalmesser erfindungsgemäß aus jedem beliebigen, hygienisch zulässigem Metall hergestellt sein können, ist es besonders vorzugswürdig, diese Bauteile aus Messing oder einer ähnlichen zinkhaltigen Legierung herzustellen. Es ergibt sich somit die gewünschte Einwaschung von Zinkionen, wobei die damit entsprechend verschleißanfälligeren Bauteile sehr einfach ausgewechselt werden können. Die übrige Anlage kann weiterhin aus dem ansonsten vorzugswürdigeren Edelstahlmaterial gefertigt werden.

Als besonders gut verarbeitbar hat sich Messing MS 58 erwiesen. Die gewünschte Einwaschung von Zinkionen wird damit erreicht.

Nachfolgend wird die Erfindung anhand lediglich bevorzugter Ausführungsformen des erfindungsgemäßen Messers darstellender Zeichnungen näher erläutert. Es zeigt:
- **Fig. 1**: einen Läuterbottich in seitlich geschnittener Darstellung;
- **Fig. 2**: eine erste Ausführungsform eines erfindungsgemäßen Messers in seitlicher Ansicht;
- **Fig. 3**: die Ausführungsform aus **Fig. 2** in Ansicht von hinten;
- **Fig. 4**: eine zweite Ausführungsform eines erfindungsgemäßen Messers in seitlicher Ansicht;
- **Fig. 5**: die Ausführungsform aus **Fig. 4** in Ansicht von hinten;
- **Fig. 6**: eine Ausführungsform eines Pflugscharelements in Ansicht von oben;
- **Fig. 7**: das Pflugscharelement aus **Fig. 6** in seitlicher Ansicht;
- **Fig. 8**: den Rohling des Pflugscharelements aus **Fig. 6** in perspektivischer Ansicht.

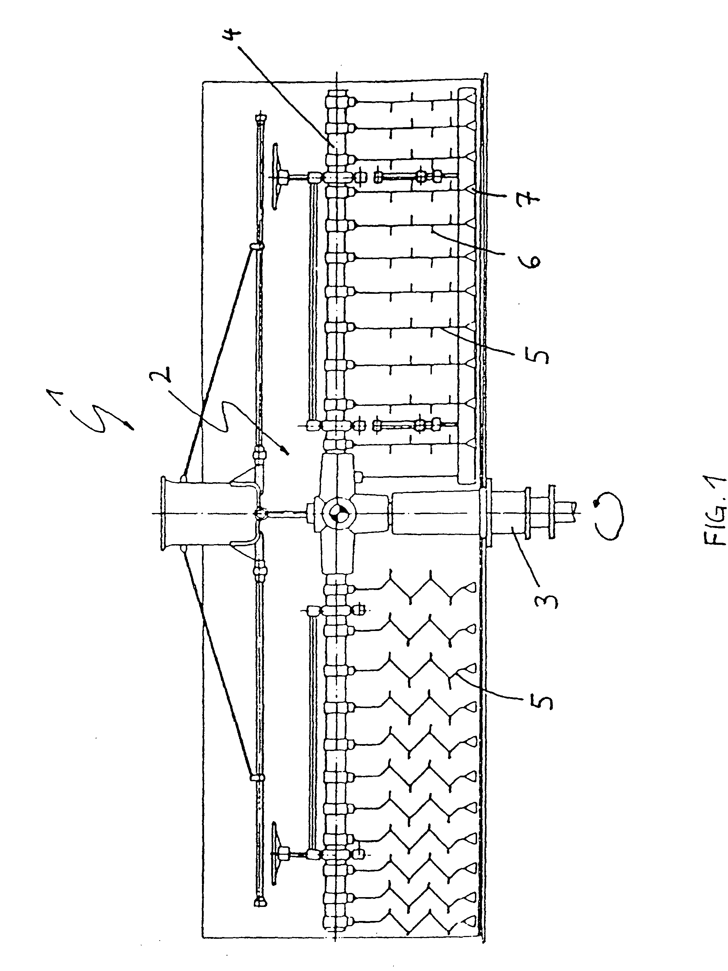

In **Fig. 1** ist schematisch der Aufbau eines Läuterbottichs 1 dargestellt. Die Aufhackmaschine 2 befindet sich in der tiefsten Stellung. Soll der nicht dargestellte Treberkuchen gelockert werden, so wird die Aufhackmaschine über die Hauptwelle 3 angetrieben und in der angedeuteten Pfeilrichtung in Rotation versetzt. Die Messerbalken 4 rotieren dabei über dem Treberkuchen, der von den Messern 5 durchschnitten wird. Zur Andeutung der verschiedenen möglichen Ausführungsformen, sind Messer 5 mit geradem Schaft auf der rechten Seite und Messer mit zickzackförmig gebogenem Schaft auf der linken Seite dargestellt. Die Messer weisen dabei jeweils vier Horizontalmesser 6 am Schaft der Aufhackmesser und ein Pflugscharelement 7 am Schaftende der Aufhackmesser auf.

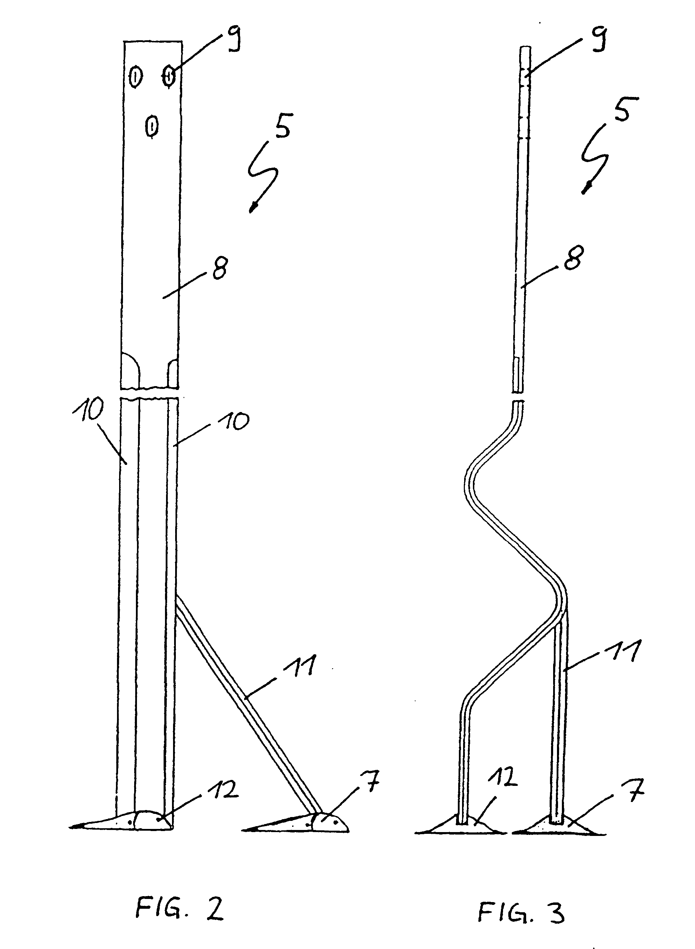

**Fig. 2** zeigt eine erste Ausführungsform eines erfindungsgemäßen Messers 5. Am oberen Ende weist der Messerschaft 8 drei Langlöcher 9 auf, mit denen das Messer an dem Messerbalken 4 befestigt werden kann. Im mittleren und unteren Bereich des Schafts sind Fasenflächen 10 angebracht, um eine Pfeilung des Schaftquerschnitts zu erreichen. Diese Pfeilung verhindert ein unerwünschtes Schieben der Schichten des Treberkuchens. Diese Ausführung des erfindungsgemäßen Messers 5 weist einen im unteren Bereich geteilten Schaft mit einem zweiten Schaftende 11 auf. An beiden Schaftenden sind Pflugscharelemente 7 mit jeweils zwei Kerbstiften 12 fixiert. In **Fig. 3** ist der zickzackförmige Aufbau des Messerschafts erkennbar.

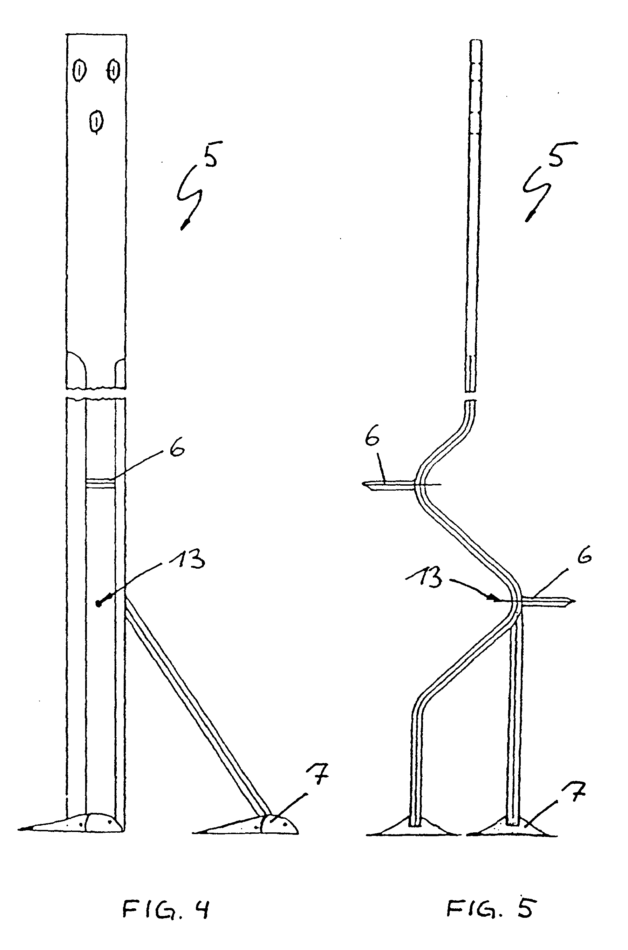

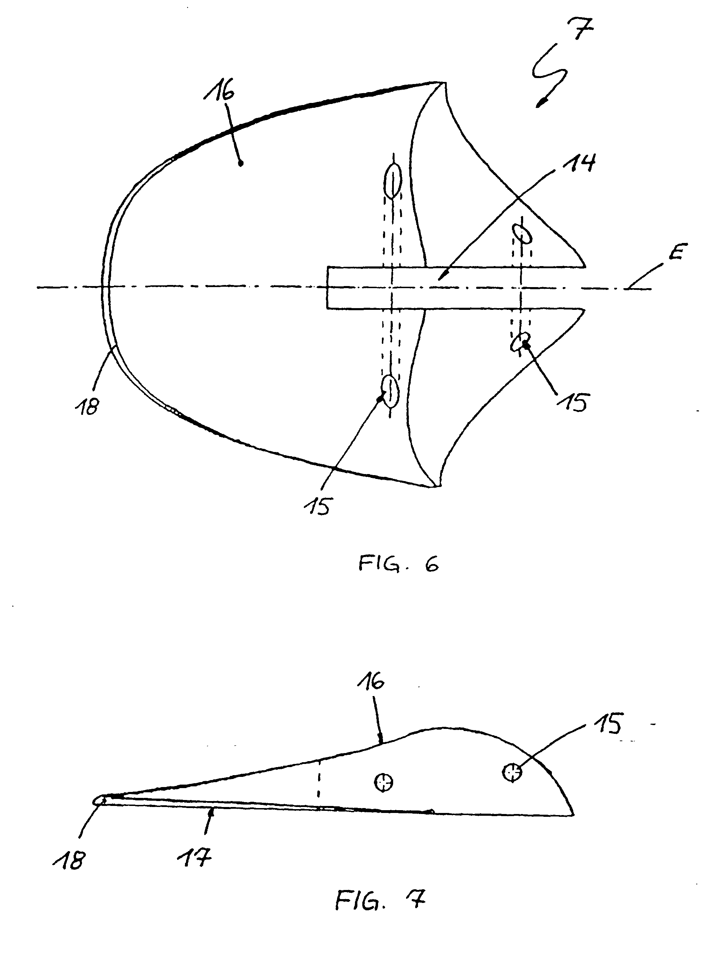

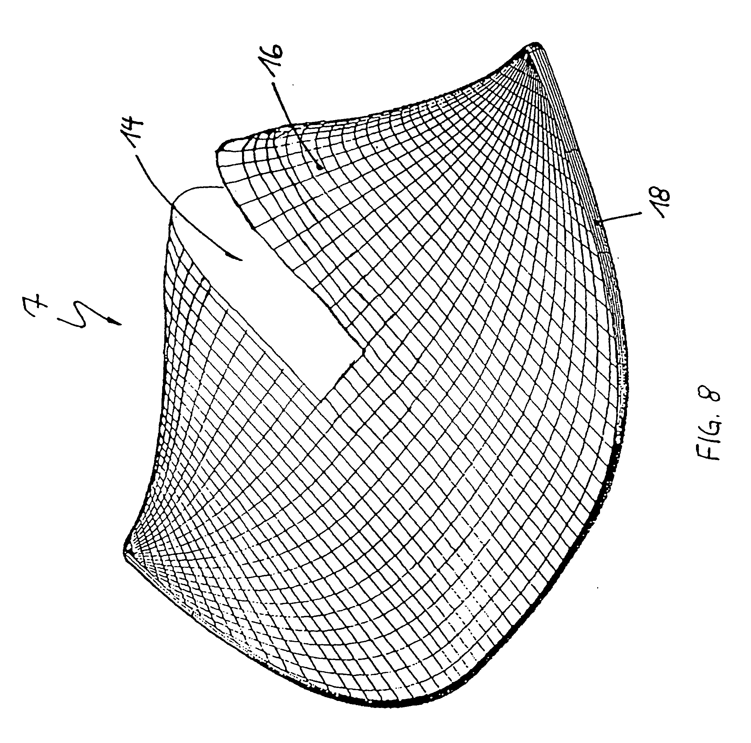

In **Fig. 4** und **Fig. 5** ist eine zweite Ausführungsform eines erfindungsgemäßen Messers 5 dargestellt. Diese Ausführungsform entspricht der in **Fig.2** und **Fig. 3** dargestellten Ausführungsform, ist jedoch um die seitlich am Schaft angebrachten Horizontalmesser 6 erweitert. Die Schrauben 13 zur lösbaren Verbindung der Horizontalmesser sind dabei nur schematisch dargestellt.

In **Fig. 6, Fig. 7** und **Fig. 8** ist eine Ausführungsform eines erfindungsgemäßen Pflugscharelements dargestellt. **Fig. 6** zeigt das Pflugscharelement 7 in Ansicht von oben. Das Pflugscharelement ist bezüglich der Symmetrieebene E spiegelsymmetrisch aufgebaut. Die Oberseite enthält den Schlitz 14, dessen Querschnitt dem Querschnitt des Schaftendes entspricht und mit dem das Pflugscharelement auf dem Messerfuß aufgeschoben werden kann. In die beiden Bohrungen 15 können Kerbstifte eingeschlagen werden, die jeweils eine Ausnehmung im Fuß des Messerschafts durchgreifen und dadurch das Pflugscharelement auf dem Fuß fixieren. Die Oberseite 16 des Pflugscharelements ist als komplexe Freiformfläche ausgestaltet. Die Unterseite 17 des Pflugscharelements weist eine ebene Oberfläche auf. Die Vorderkante 18 des Pflugscharelements weist einen kantenfreien Radialübergang von der Oberseite 16 zur Unterseite 17 auf, um den Verschleiß des Pflugscharelements in diesem Schneidbereich zu minimieren.

Die Netzlinien in der perspektivischen Darstellung von **Fig. 8** lassen die komplexe Freiformflächen an der Oberseite 16 des Pflugscharelements 7 erkennen. Der dargestellte Rohling eines Pflugscharelements weist noch keine Bohrungen 15 auf. Lediglich der Schlitz 14 ist bereits in den Gußkörper eingearbeitet.

## Patentansprüche

1. Messer für eine Vorrichtung zum Aufhacken des bei der Bierherstellung anfallenden Treberkuchens in einem Läuterbottich, wobei das Messer einen geraden, gewellten oder zickzackförmigen, insgesamt im wesentlichen vertikal verlaufenden Schaft aufweist, an dessen Schaftende mindestens ein Hack- oder Schneidelement angeordnet ist,
**dadurch gekennzeichnet,**
**daß** das Hack- oder Schneidelement (7) lösbar an dem Schaft (5) befestigbar ist.

2. Messer nach Anspruch 1,
**dadurch gekennzeichnet,**
**daß** die lösbare Verbindung als Schraubverbindung ausgeführt ist.

3. Messer nach Anspruch 1,
**dadurch gekennzeichnet,**
**daß** die lösbare Verbindung als Kerbstiftverbindung ausgeführt ist.

4. Messer nach Anspruch 1,
**dadurch gekennzeichnet,**
**daß** die lösbare Verbindung als Klebverbindung ausgeführt ist.

5. Messer nach Anspruch 1,
**dadurch gekennzeichnet,**
**daß** die lösbare Verbindung als Nietverbindung ausgeführt ist.

6. Messer nach Anspruch 1,
**dadurch gekennzeichnet,**
**daß** die lösbare Verbindung als Schrumpfverbindung ausgeführt ist.

7. Messer nach einem der Ansprüche 1 bis 4,
**dadurch gekennzeichnet,**
**daß** das Hack- oder Schneidelement (7) pflugscharähnlich ausgebildet ist, und an der Unterseite eine im wesentlichen ebene oder konkave Oberfläche und im Querschnitt eine im wesentlichen keilförmige Außenkontur aufweist.

8. Messer nach Anspruch 7,
**dadurch gekennzeichnet,**
**daß** das pflugscharähnlich ausgebildete Hack- oder Schneideelement (7) bezüglich der senkrechten Ebene, die Pflugscharspitze und Pflugscharende schneidet, spiegelsymmetrisch aufgebaut ist.

9. Messer nach einem der Ansprüche 7 oder 8,
**dadurch gekennzeichnet,**
**daß** das pflugscharähnlich ausgebildete Hack- oder Schneideelement (7) eine Nut oder einen Schlitz (14) enthält, wobei der Querschnitt der Nut zumindest abschnittsweise formkomplementär zum Querschnitt des Messerschaftes (5) ausgestaltet ist.

10. Messer nach Anspruch 9,
**dadurch gekennzeichnet,**
**daß** das pflugscharähnlich ausgebildete Hack- oder Schneideelement (7) zumindest eine senkrecht zur Nut und parallel zur Unterseite verlaufende Bohrung (15) zur Aufnahme einer Schraube, eines Kerbstifts oder ähnlichem aufweist.

11. Messer nach Anspruch 9,
dadurch gekennzei chn et,
daß das pflugscharähnlich ausgebildete Hack- oder Schneideelement (7) zumindest eine parallel zur Nut und senkrecht zur Unterseite verlaufende Bohrung zur Aufnahme einer Schraube, eines Kerbstifts oder ähnlichem aufweist.

12. Messer nach einem der Ansprüche 1 bis 9,
**dadurch gekennzeichnet,**
**daß** das Messer einen im unteren Bereich geteilten Schaft aufweist, wobei an beiden Schaftenden ein Hack- oder Schneidelement (7, 12) angeordnet ist.

13. Messer nach einem der Ansprüche 1 bis 10,
**dadurch gekennzeichnet,**
**daß** im mittleren Bereich des Schaftes im wesentlichen horizontal verlaufende Schneidelemente (6) lösbar befestigbar sind.

14. Messer nach einem der Ansprüche 1 bis 11,
**dadurch gekennzeichnet,**
**daß** der Schaft des Messers (5) im wesentlichen aus einem gebogenen Flachstahl, insbesondere aus Edelstahl, hergestellt ist.

15. Messer nach einem der Ansprüche 1 bis 12,
**dadurch gekennzeichnet,**
**daß** das Hack- oder Schneidelement (7, 12) ein Gußkörper ist.

16. Messer nach einem der Ansprüche 1 bis 13,
**dadurch gekennzeichnet,**
**daß** das Hack- oder Schneidelement (7, 12) aus einem Nichteisenmetall hergestellt ist.

17. Messer nach einem der Ansprüche 1 bis 14,
**dadurch gekennzeichnet,**
**daß** das Hack- oder Schneidelement (7, 12) aus Messing, insbesondere aus MS 58, hergestellt ist.

## Claims

1. Knife for a device for chopping up the spent grains cake resulting from the production of beer in a lauter tub, wherein the knife comprises a straight, corrugated or zigzag shank which as a whole extends substantially vertically and at the end of which at least one chopping or cutting element is disposed,
**characterised in that** the chopping or cutting element (7) may be fastened to the shank (5) in a releasable manner.

2. Knife according to claim 1,
**characterised in that** the releasable joint is in the form of a screwed joint.

3. Knife according to claim 1,
**characterised in that** the releasable joint is in the form of a grooved pin joint.

4. Knife according to claim 1,
**characterised in that** the releasable joint is in the form of a glued joint.

5. Knife according to claim 1,
**characterised in that** the releasable joint is in the form of a riveted joint.

6. Knife according to claim 1,
**characterised in that** the releasable joint is in the form of a shrink joint.

7. Knife according to any one of claims 1 to 4,
**characterised in that** the chopping or cutting element (7) is formed like a ploughshare and has a substantially plane or concave surface at the underside and a substantially wedge-shaped outer contour in cross section.

8. Knife according to claim 7,
**characterised in that** the chopping or cutting element (7) formed like a ploughshare is constructed such that it exhibits mirror symmetry relative to the perpendicular plane which intersects the tip and the end of the ploughshare.

9. Knife according to either of claims 7 and 8,
**characterised in that** the chopping or cutting element (7) formed like a ploughshare comprises a groove or a slot (14), wherein the cross section of the groove is shaped at least in parts so as to be complementary to the cross section of the knife shank (5).

10. Knife according to claim 9,
**characterised in that** the chopping or cutting element (7) formed like a ploughshare comprises at least one bore (15) extending perpendicularly to the groove and parallel to the underside for receiving a screw, a grooved pin or similar.

11. Knife according to claim 9,
**characterised in that** the chopping or cutting element (7) formed like a ploughshare comprises at least one bore extending parallel to the groove and perpendicularly to the underside for receiving a screw, a grooved pin or similar.

12. Knife according to any one of claims 1 to 9,
**characterised in that** the knife comprises a shank which is split in the lower region, wherein a chopping or cutting element (7, 12) is disposed at both shank ends.

13. Knife according to any one of claims 1 to 10,
**characterised in that** cutting elements (6) extending substantially horizontally may be fastened in a releasable manner in the central region of the shank.

14. Knife according to any one of claims 1 to 11,
**characterised in that** the shank of the knife (5) is produced from a bent flat steel bar, in particular of special steel.

15. Knife according to any one of claims 1 to 12,
**characterised in that** the chopping or cutting element (7, 12) is a casting.

16. Knife according to any one of claims 1 to 13,
**characterised in that** the chopping or cutting element (7, 12) is made of a non-ferrous metal.

17. Knife according to any one of claims 1 to 14,
**characterised in that** the chopping or cutting element (7, 12) is made of brass, in particular of MS 58.

## Revendications

1. Lame destinée à un dispositif de hachage du gâteau de drêches se produisant dans une cuve à filtration, lors de la fabrication de bière, la lame présentant une tige rectiligne, ondulée, ou en zigzag, s'étendant sensiblement à la verticale dans l'ensemble, au moins un élément de hachage ou de coupe étant disposé à l'extrémité de la tige,
**caractérisée en ce que**
l'élément de hachage ou de coupe (7) peut être fixé de manière amovible sur la tige (5).

2. Lame selon la revendication 1,
**caractérisée en ce que**
la liaison amovible est réalisée sous forme de boulonnage.

3. Lame selon la revendication 1,
**caractérisée en ce que**
la liaison amovible est réalisée sous forme de liaison par goupille cannelée.

4. Lame selon la revendication 1,
**caractérisée en ce que**
la liaison amovible est réalisée sous forme de liaison par collage.

5. Lame selon la revendication 1,
**caractérisée en ce que**
la liaison amovible est réalisée sous forme de liaison par rivets.

6. Lame selon la revendication 1,
**caractérisée en ce que**
la liaison amovible est réalisée sous forme de liaison rétractable.

7. Lame selon l'une quelconque des revendications 1 à 4,
**caractérisée en ce que**
l'élément de hachage ou de coupe (7) est réalisé sous une forme identique à un fer de charrue et **en ce qu'**il présente sur sa face inférieure une surface sensiblement plane ou concave et **en ce qu'**en section transversale, il présente un contour extérieur ayant sensiblement la forme d'un coin.

8. Lame selon la revendication 7,
**caractérisée en ce que**
l'élément de hachage ou de coupe (7) conçu sous forme identique à un fer de charrue est conçu en symétrie spéculaire, par rapport au plan horizontal, coupant la pointe et l'extrémité du fer de charrue.

9. Lame selon l'une quelconque des revendications 7 ou 8,
**caractérisée en ce que**
l'élément de hachage ou de coupe (7) conçu sous forme identique à un fer de charrue comprend une rainure ou une fente (14), la section transversale de la rainure étant complémentaire au moins par segments à la forme de la section transversale de la tige de la lame (5).

10. Lame selon la revendication 9,
**caractérisée en ce que**
l'élément de hachage ou de coupe (7) conçu sous forme identique à un fer de charrue présente au moins un perçage (15) s'étendant à la perpendiculaire de la rainure et en parallèle de la face inférieure et destiné à réceptionner une vis, une goupille cannelée ou analogue.

11. Lame selon la revendication 9,
**caractérisée en ce que**
l'élément de hachage ou de coupe (7) conçu sous forme identique à un fer de charrue présente au moins un perçage s'étendant en parallèle de la rainure et à la perpendiculaire de la face inférieure et destiné à réceptionner une vis, une goupille cannelée ou analogue.

12. Lame selon l'une quelconque des revendications 1 à 9,
**caractérisée en ce que**
la lame présente une tige divisée dans sa zone inférieure, un élément de hachage ou de coupe (7, 12) étant disposé sur les deux extrémités de la tige.

13. Lame selon l'une quelconque des revendications 1 à 10,
**caractérisée en ce que**
des éléments de coupe (6) s'étendant sensiblement à l'horizontale peuvent être fixés de manière amovible sur la zone médiane de la tige.

14. Lame selon l'une quelconque des revendications 1 à 11,
**caractérisée en ce que**
la tige de la lame (5) est sensiblement constituée d'un acier plat, notamment d'un acier fin.

15. Lame selon quelconque des revendications 1 à 12,
**caractérisée en ce que**
l'élément de hachage ou de coupe (7, 12) est un élément en fonte.

16. Lame selon l'une quelconque des revendications 1 à 13,
**caractérisée en ce que**
l'élément de hachage ou de coupe (7, 12) est fabriqué dans un métal non ferreux.

17. Lame selon l'une quelconque des revendications 1 à 14,
**caractérisée en ce que**
l'élément de hachage ou de coupe (7, 12) est fabriqué en laiton, notamment en MS 58.
